# EUROPEAN PATENT SPECIFICATION

(11) **EP 0 565 691 B1**
(45) Date of publication and mention of the grant of the patent: **31.01.1996**
(21) Application number: 92922867.4
(22) Date of filing: 05.11.1992
(51) Int. Cl.: B41M 1/36, D21H 19/38, C09C 3/08, B41M 1/10

(54) **COATING PIGMENTS**
BESCHICHTUNGSPIGMENTE
PIGMENTS UTILISES DANS DES COMPOSITIONS POUR COUCHAGE DE PAPIER

(30) Priority: 06.11.1991 EP 91310273
(43) Date of publication of application: 20.10.1993
(73) Proprietor: ECC INTERNATIONAL LIMITED, Theale, Reading, Berkshire RG7 4SA (GB)
(72) Inventor: GANE, Patrick Arthur Charles, Callington,Cornwall (GB); McGENITY, Philip Martin, St Austell, Cornwall PL25 3UW (GB)
(74) Representative: Nash, David Allan
(86) International application number: GB9202044
(87) International publication number: WO9309289

(56) References cited:
- EP-A- 0 026 091
- US-A- 4 911 982

## Description

This invention concerns improved pigments for incorporation into coating compositions for use in preparing coated paper or cardboard which has especially advantageous properties when used in the rotogravure printing process. Herein, the expression "paper coating composition" and related expressions such as "paper coating pigment" are intended to be construed broadly to cover compositions, etc. for use in the coating of all fibrous base materials, including, for instance, board.

Paper coating compositions generally comprise one or more pigments and an adhesive material in suspension in an aqueous medium. The most commonly used pigments are generally natural or synthetic inorganic materials of white colour and of fine particle size, generally such that at least about 50% by weight of the particles have an equivalent spherical diameter (esd) which is smaller than 2µm. Examples of pigments which are commonly used in paper coating compositions are kaolin or china clay, natural or precipitated calcium carbonate, satin white, calcium sulphate and talc. With the exception of talc, these pigments have a generally hydrophilic surface and are therefore not easily wetted by organic media.

The rotogravure printing process is generally most suited to those applications in which a very large number of copies is required to be printed, because the process by which a rotogravure printing cylinder is prepared, having on its surface a matrix of cells or depressions which vary in depth according to the quantity of ink which is required to be transferred to the paper by each individual cell, is relatively expensive compared with the preparation of printing plates for use in other methods of printing. Because of the large number of copies required to be printed, it is generally advantageous to run the printing press at high speed, and this necessitates the use of a printing ink which dries quickly on the paper to avoid "offset", or the transfer of undried printing ink from one sheet of paper to the next. It is therefore desirable to use a printing ink which has a solvent which is more volatile than water. Such volatile solvents are almost invariably organic and oleophilic, and it has been found that a gravure printing ink based on such a solvent is not always well absorbed into a conventional paper coating formed by applying to the surface of the base paper a composition containing a pigment with a hydrophilic surface.

Talc, which is unusual among inorganic pigments in having a hydrophobic surface, has been used in paper coating compositions, generally in a mixture with one or more other inorganic pigments, but if a high proportion of talc is used the resulting coating on the paper has a "slippery" feel and the coefficient of friction of the paper surface is reduced to such an extent that difficulties have been experienced in feeding the coated paper through conventional printing machines.

EP-A-0026091 describes a method of making fillers for papermaking hydrophobic by coating the filler particles with wax, preferably paraffin wax for the purpose of sizing. The technique of sizing aims to prevent excessive penetration of water into paper during coating, writing or printing with water-containing inks.

According to a first aspect of the present invention, there is provided a gravure printing process in which an image is printed onto a paper sheet member characterised in that the paper employed is one having a surface coating containing a paper coating pigment the surfaces of which have been modified with a treating agent having a hydrophobic portion to confer hydrophobic or enhanced hydrophobic character on the pigment surfaces.

According to a second aspect of the present invention, there is provided a paper coating composition for preparing a coated paper for use in a gravure printing process, which paper coating composition comprises an aqueous suspension of an adhesive, a dispersing agent and a particulate, inorganic paper coating pigment, characterised in that the pigment has been modified by treatment with a treating agent, prior to incorporation in the paper coating composition, which renders the pigment surfaces hydrophobic or enhances their hydrophobicity, wherein the treating agent employed to treat the particles of pigment has a non-polar hydrophobic portion comprising at least one hydrocarbon group having a chain length of from 8 to 30 carbon atoms and a polar portion which is capable of binding with sites on the pigment surfaces.

According to another aspect of the present invention, there is provided the use as a gravure paper coating pigment of a pigment, the surfaces of which have been modified with a treating agent having a hydrophobic portion thereby to confer hydrophobic or enhanced hydrophobic character on the pigment surfaces.

The pigment for use in the present invention is preferably one whose native surfaces are hydrophilic, for example natural or synthetic layer-lattice-silicate such as kaolin (or china clay), natural or precipitated calcium carbonate, satin white or calcium sulphate or a mixture of one or more of these pigments. The present invention may be used with pigments which are not hydrophilic, but whose surfaces are required to be modified in order to increase or enhance their hydrophobicity.

It should be appreciated that the treated pigment of the present invention may be mixed with untreated pigments in the preparation of paper coating compositions and printing papers. Preferably, in any such admixture, the treated pigment should be present in an amount of at least 20% by weight, based on the total weight of pigment. In some embodiments of the present invention, the treated pigment will be the sole pigment used.

The polar portion which is capable of binding with sites on the pigment surfaces may bind either directly or indirectly - for example with an intermediate material which binds the site on the pigment surface with the polar portion of the treating agent. The treating agent may be capable of binding with the site on the pigment either in aqueous suspension or a dry mix of the pigment. The precise nature of the polar portion of the treating agent must be determined empirically. However, in some cases, it may be possible to infer an appropriate surface treatment agent from a knowledge of the surface chemistry of the pigment. For example, it is currently thought that amines bind to the surface of kaolin by electron donation into the electron acceptor (Lewis acid) sites on the clay surface.

Preferably the quantity of the treating agent used will be from 0.05% to 5.0% by weight, based on the weight of the pigment. Most preferably, the amount of the treating agent will be from 0.1% to 2.0% by weight, based on the weight of the pigment.

Some pigments used in paper coating compositions, typically natural or synthetic silicates, and especially kaolin, have surfaces which have a number of acidic sites. In accordance with the present invention these pigments are preferably treated with a primary, secondary or tertiary amine which has at least one hydrocarbon group having a chain length from 8 to 30 carbon atoms, since organic nitrogen-containing compounds of this type have a polar portion from which electron donation to the Lewis acid sites on the clay may take place. A quaternary ammonium compound, having at least one hydrocarbon group with a chain length from 8 to 30 carbon atoms, may also be used to treat natural or synthetic silicates and aluminosilicates, although the mechanism of binding in this case is uncertain. Examples of suitable amines and quaternary ammonium compounds include primary octadecylamine, primary hydrogenated tallow amine, trimethyl hydrogenated tallow ammonium chloride and dimethyl di(hydrogenated tallow) ammonium chloride.

On the other hand, calcium carbonate, which is another commonly used paper coating pigment, is preferably treated with a treating agent such as a saturated or unsaturated fatty acid having at least one hydrocarbon group of chain length from 8 to 30 carbon atoms. Such fatty acids include stearic acid, palmitic acid and oleic acid.

In a paper coating composition in accordance with this invention the adhesive is preferably a latex, which may be, for example, a styrene-butadiene latex or an acrylic latex, and which may, or may not be, of the alkali-swelling type. The quantity of the latex used is preferably in the range from 3% to 6% by weight of latex solids, based on the dry weight of the surface treated pigment. The latex is normally used in the form of an aqueous emulsion containing about 50% by weight of latex solids.

The dispersing agent may be, for example, a water soluble salt of a polyphosphoric acid, a water soluble salt of a polysilicic acid, a water soluble salt of a poly(acrylic acid) or a poly(methacrylic acid) or a water soluble salt of an alkyl sulphate or an alkyl sulphonate wherein the alkyl group has a chain length of from 8 to 20 carbon atoms. The dispersing agent is selected to give optimum performance with a particular surface treated pigment. For example, when the surface treated pigment is a natural calcium carbonate treated with stearic acid, the preferred dispersing agent is sodium dodecyl sulphate. The quantity of dispersing agent used is preferably in the range of from 0.05% to 2.0% by weight, based on the weight of the dry pigment.

The present invention also relates to a paper coated with a paper coating composition in accordance with the present invention and to a printing process in which an image is printed onto such a paper employing a gravure (preferably a rotogravure) printing technique.

The invention will now be illustrated by the following Examples.

### EXAMPLE 1

Two paper coating compositions were prepared according to the following recipe:

| Ingredient | % by weight |
|---|---|
| Pigment | 100 |
| Styrene-butadiene latex adhesive | 4.5 |
| Sodium hydroxide | to give pH 8.0 |
| Water | to give a viscosity of 1,000 mPa.s |

The viscosity of the coating composition was measured using a Brookfield Viscometer at a spindle speed of 100 rpm.

In the first composition the pigment was a ground natural marble which had a particle size distribution such that 90% by weight of the particles had an equivalent spherical diameter smaller than 2µm. In this case there was added as the dispersing agent for the pigment 0.5% by weight, based on the weight of dry pigment, of a sodium polyacrylate dispersing agent having a number average molecular weight of about 4,000.

In the second composition the pigment was surface treated in accordance with the invention by milling the same ground natural marble as was used in the first composition in dry powder form with 1% by weight, based on the weight of dry marble, of stearic acid at a temperature of 120°C. In this case there was added as the dispersing agent for the pigment 0.25% by weight, based on the weight of dry pigment, of sodium dodecyl sulphate.

Each composition was coated on to a rotogravure base sheet of weight 34gm⁻² by means of a laboratory paper coating machine of the type described in GB-A-2225261 running at a paper speed of 400 m.min⁻¹ and at a blade holder angle of 45°. The coatings were dried using hot air only at a temperature of 200°C and each batch of coated paper was passed 10 times between the rolls of a laboratory supercalender at a temperature of 65°C and a roll pressure of 750 psi (5.17 MPa). For each composition, several coating runs were made with, in each case, the blade pressure set at a different value to give different coat weights in the range from about 5 to about 14gm⁻². Each sample of coated paper was tested for gloss by the method prescribed in TAPPI Standard No. T480ts-65 using a Hunterlab D16 gloss meter at an angle of incidence and measurement of 75° with the normal to the paper. The samples of paper coated at the different coat weights were also tested for gravure print quality by methods described in the article "Realistic paper tests for various printing processes" by A. Swan, published in "Printing Technology", Vol. 13, No. 1, April 1969, pages 9-22. A gravure printing cylinder was used with an area of deeply etched cells to give a solid black area, and an area of less deeply etched cells to give a half-tone area. The half-tone area was used to estimate the percentage of gravure dots which were missing from the test print. This percentage was expressed as "% missing dots". The solid black area was used to measure the gravure print density using a Macbeth density meter.

For each series of tests, the quantity measured was plotted graphically against the coat weight and the value for a coat weight of 10gm⁻² was found by interpolation. The results are set forth in Table I below:-

**TABLE I**

| | Gloss | % missing dots | print density |
|---|---|---|---|
| Untreated marble | 56 | 5.2 | 1.39 |
| Surface treated marble | 58 | 3.1 | 1.5 |

These results show that the coating composition containing the surface treated marble pigment gives a coating which has slightly better gloss and which gives much better gravure print density and half-tone quality than the composition containing the untreated marble.

It is believed that the surface treated pigment renders the coating hydrophobic so that its affinity with the solvent used in the printing ink is increased, and the ink is therefore drawn more readily onto the coating with the result that the gravure print quality is improved.

### EXAMPLE 2

Three paper coating compositions were prepared according to the recipe:

| Ingredient | % by weight |
|---|---|
| Pigment | 100 |
| Styrene-butadiene latex adhesive | 5 |
| Sodium hydroxide | to give pH 8 |
| Water | to give a viscosity of 1,000 mPa.s |

The viscosity of the coating composition was measured in each case by means of a Brookfield Viscometer at a spindle speed of 100 rpm.

In the first composition, the pigment was an English kaolin clay which had a particle size distribution such that 80% by weight of the particles had an equivalent spherical diameter smaller than 2µm. In this case there was added as the dispersing agent for the pigment 0.3% by weight, based on the weight of dry pigment, of the same sodium polyacrylate dispersing agent as was used in Example 1 above and 0.08% by weight, based on the weight of dry pigment, of sodium hydroxide.

In the second and third compositions the pigment was surface treated in accordance with the invention by mixing in a "Waring Blendor" (TM) at 100°C for 15 minutes the same kaolin as was used in the first composition in dry powder form with 0.5% and 1% by weight, respectively, based on the weight of dry kaolin, of a molten primary hydrogenated tallow amine. In each of these two compositions sodium dodecyl sulphate was added as the dispersing agent for the pigment, the amounts used being, respectively, 1.3% by weight and 1.7% by weight, based on the weight of dry pigment.

Each composition was coated on to a rotogravure base sheet of weight 34gm⁻² by means of a laboratory paper coating machine of the type described in GB-2225261 running at a paper speed of 400 m.min⁻¹ and at a blade holder angle of 45°. The coatings were dried using hot air only at a temperature of 200°C and each batch of coated paper was passed 10 times between the rolls of a laboratory supercalender at a temperature of 65°C and a roll pressure of 750 psi (5.17 MPa). For each composition several coating runs were made with, in each case, the blade pressure set at a different value to give different coat weights in the range from about 5 to about 14 gm⁻². Each sample of coated paper was tested for gloss by the method prescribed in TAPPI Standard No. T480ts-65. The samples of paper coated at the different coat weights were also tested for gravure print quality by methods described in the article "Realistic paper tests for various printing processes" by A. Swan, published in "Printing Technology", Vol. 13, No. 1, April 1969, pages 9-22.

For each series of tests, the quantity measured was plotted graphically against the coat weight and the value for a coat weight of 8gm⁻² was found by interpolation. The results are set forth in Table II below:-

**TABLE II**

| | Gloss | % missing dots |
|---|---|---|
| Untreated kaolin | 65 | 2.4 |
| Kaolin + 0.5% amine | 67 | 0.7 |
| Kaolin + 1.0% amine | 70 | 0.6 |

These results show that the coating compositions containing the surface treated kaolin pigment give a coating which has better gloss and which gives much better half-tone gravure print quality than the composition containing the untreated kaolin.

### EXAMPLE 3

Two paper coating compositions were prepared according to the recipe:

| Ingredient | % by weight |
|---|---|
| Pigment | 100 |
| Alkali-swelling acrylic latex | 4.5 |
| Sodium hydroxide | to give pH 8 |
| Water | to give a viscosity of 1,000 MPa.s |

The viscosity of the coating composition was measured by means of a Brookfield Viscometer at a spindle speed of 100 rpm.

In the first composition the pigment was a ground natural chalk having a particle size distribution such that 60% by weight of the particles had an equivalent spherical diameter smaller than 2µm. In this case there was added as the dispersing agent for the pigment 0.5% by weight, based on the weight of dry pigment, of the same sodium polyacrylate dispersing agent as was used in Example 1.

In the second composition the pigment was surface treated in accordance with the invention by grinding the same ground natural chalk as was used in the first composition with 1% by weight, based on the weight of dry chalk, of stearic acid at a temperature of 120°C. In this case there was used as the dispersing agent 0.5% by weight, based on the weight of dry chalk, of sodium dodecyl sulphate.

Each composition was coated on to each of two different base papers which had been pre-coated with a composition containing a calcium carbonate pigment. The first paper had a relatively smooth surface and a total substance weight of 113 gm⁻² and the second had a relatively rough surface and a total substance weight of 87 gm⁻². In each case the coating composition was applied by means of a small-scale, bench-top blade coating apparatus and the coatings were dried in the air. The samples of coated paper were then passed 10 times between the rolls of a laboratory supercalender at a temperature of 65°C. For each composition and for each base paper several coatings were made having coat weights in the range from about 4 to about 14 gm⁻². Each sample of coated paper was tested for gloss by the method prescribed in TAPPI Standard No. T480ts-65, and print impressions obtained by the method described in the article "Realistic paper tests for various printing processes" were tested for % missing dots on the half-tone area and for print gloss and print density on the solid black area.

For each series of tests, the quantity measured was plotted graphically against the coat weight and the value for a coat weight of 8 gm⁻² was found by interpolation. The results are set forth in Table III below:-

**TABLE III**

| | Paper gloss | % missing dots | Print gloss | Print density |
|---|---|---|---|---|
| Untreated chalk, rough paper | 20 | 6.0 | 55 | 1.70 |
| Treated chalk, rough paper | 20 | 4.7 | 55 | 1.75 |
| Untreated chalk, smooth paper | 30 | 0.8 | 70 | 1.95 |
| Treated chalk, smooth paper | 30 | 0.4 | 70 | 1.95 |

These results show that, in coating compositions applied to both rough and smooth base paper, the percentage of missing dots in the half-tone area is lower when the pigment is surface treated in accordance with the invention. In this case there is little difference in the results for paper gloss, print gloss and print density between the compositions containing the treated and untreated chalk pigments respectively.

### EXAMPLE 4

Two paper coating compositions were prepared according to the recipe:

| Ingredient | % by weight |
|---|---|
| Pigment | 100 |
| Styrene-butadiene latex adhesive | 5 |
| Sodium hydroxide | to give pH 8.5 |
| Water | to give 59.0% solids |

In composition 1 the pigment was an English kaolin clay which had a particle size distribution such that 81% by weight of the particles had an equivalent spherical diameter smaller than 2µm. In this case there was added as the dispersing agent for the pigment 0.3% by weight, based on the weight of the dry kaolin, of the same sodium polyacrylate dispersing agent as was used in Example 1 and 0.08% by weight, based on the weight of dry kaolin, of sodium hydroxide.

In composition 2 the English kaolin clay used in Composition 1 was mixed in dry powder form with 1.0% by weight, based on the weight of the dry kaolin of a molten primary hydrogenated tallow amine in a heated jacket laboratory mixer manufactured by Steele and Cowlishaw at 100°C for 5 minutes. The mixture was then suspended in water containing 1.4% by weight, based on the weight of the dry kaolin, of sodium dodecyl sulphate and 1.0% by weight, based on the weight of the dry kaolin, of an alkyl phosphate ester antifoaming agent.

The viscosity of each composition was measured by means of a Brookfield Viscometer at a spindle speed of 100 rpm.

Each composition was coated on to a rotogravure base sheet of weight 38.4 gm⁻² by means of a laboratory paper coating machine of the type described in GB-A-2225261 running at paper speed of 400m.min⁻¹ and at a blade holder angle of 45°. The coatings were dried using hot air only at a temperature of 200°C, and each batch of coated paper was conditioned at 23°C and 50% relative humidity for 24 hours and was then passed 10 times between the rolls of a laboratory supercalender at a temperature of 65°C and a roll of pressure of 750 psi (5.17 MPa). For each composition several coating runs were made with, in each case, the blade pressure set at different values to give different coat weights in the range from about 5 to about 13 gm⁻². Each sample of coated paper was tested for gloss and for gravure print quality by the methods described in Example 1. For each series of tests, the quantity measured was plotted graphically against the coat weight and the value for a coat weight of 8 gm⁻² was found by interpolation.

The results obtained are set forth in Table IV below:-

**TABLE IV**

| Composition | | Viscosity (mPa.s) | Gloss | % missing dots |
|---|---|---|---|---|
| 1. | Kaolin dispersed with sodium polyacrylate | 110 | 68.3 | 0.66 |
| 2. | Kaolin + 1.0% amine dispersed with sodium dodecyl sulphate | 760 | 72.0 | 0.08 |

These results show that Composition 2 containing the kaolin pigment surface treated with the amine and sodium dodecyl sulphate gave a coating which had better gloss and gave very much better half-tone gravure print quality than Composition 1 containing kaolin dispersed with sodium polyacrylate.

## Claims

1. A gravure printing process in which an image is printed onto a paper sheet member characterised in that the paper employed is one having a surface coating containing a paper coating pigment the surfaces of which have been modified with a treating agent having a hydrophobic portion to confer hydrophobic or enhanced hydrophobic character on the pigment surfaces.

2. A gravure printing process according to claim 1, wherein the treating agent has a non-polar portion comprising at least one hydrocarbon group having a chain length of from 8 to 30 carbon atoms whereby the pigment surfaces are modified such that they are provided with a plurality of hydrocarbon groups each having a chain length of from 8 to 30 carbon atoms.

3. A gravure printing process according to claim 1 or 2, wherein the treating agent contains at least one polar group capable of binding the treating agent to the surfaces of the untreated pigment.

4. A gravure printing process according to any preceding claim, wherein the pigment is one which has a naturally hydrophilic surface.

5. A gravure printing process according to claim 4, wherein the pigment is a kaolinitic clay, a natural or precipitated calcium carbonate, satin white or calcium sulphate or a mixture of one or more of these pigments.

6. A gravure printing process according to any preceding claim, wherein the pigment is a kaolinitic clay and the treating agent is a primary, secondary or tertiary amine which has at least one hydrocarbon group having a chain length from 8 to 30 carbon atoms or a quaternary ammonium compound, having at least one hydrocarbon group with a chain length from 8 to 30 carbon atoms.

7. A gravure printing process according to any one of claims 1 to 5, wherein the pigment is a calcium carbonate and the treating agent is a saturated or unsaturated fatty acid having at least one hydrocarbon group of chain length from 8 to 30 carbon atoms.

8. A gravure printing process according to any preceding claim, wherein the quantity of the treating agent employed is from 0.05% to 5.0% by weight, based on the weight of the pigment, preferably from 0.1% to 2.0% by weight, based on the weight of the pigment.

9. A paper coating composition for preparing a coated paper for use in a gravure printing process, which paper coating composition comprises an aqueous suspension of an adhesive, a dispersing agent and a particulate, inorganic paper coating pigment, characterised in that the pigment has been modified by treatment with a treating agent, prior to incorporation in the paper coating composition, which renders the pigment surfaces hydrophobic or enhances their hydrophobicity, wherein the treating agent employed to treat the particles of pigment has a non-polar hydrophobic portion comprising at least one hydrocarbon group having a chain length of from 8 to 30 carbon atoms and a polar portion which is capable of binding with sites on the pigment surfaces.

10. A paper coating composition according to claim 9, wherein the pigment is one which has a naturally hydrophilic surface.

11. A paper coating composition according to claim 10, wherein the pigment is a kaolinitic clay, a natural or precipitated calcium carbonate, satin white or calcium sulphate or a mixture of one or more of these pigments.

12. A paper coating composition according to any one of claims 9 to 11, wherein the pigment is a kaolinitic clay and the treating agent is a primary, secondary or tertiary amine which has at least one hydrocarbon group having a chain length from 8 to 30 carbon atoms or with a quaternary ammonium compound, having at least one hydrocarbon group with a chain length from 8 to 30 carbon atoms.

13. A paper coating composition according to any one of claims 9 to 11, wherein the pigment is calcium carbonate and the treating agent is a saturated or unsaturated fatty acid having at least one hydrocarbon group of chain length from 8 to 30 carbon atoms.

14. A paper coating composition according to any one of claims 9 to 13, wherein the quantity of the treating agent employed is from 0.05% to 5.0% by weight, based on the weight of the pigment, preferably from 0.1% to 2.0% by weight, based on the weight of the pigment.

15. The use as a gravure paper coating pigment of a pigment, the surfaces of which have been modified with a treating agent having a hydrophobic portion thereby to confer hydrophobic or enhanced hydrophobic character on the pigment surfaces.

16. A paper coated with a paper coating composition in accordance with any one of claims 9 to 14.

17. A printing process in which an image is printed onto a paper as claimed in claim 16 employing a gravure printing technique.

## Patentansprüche

1. Tiefdruckverfahren, bei dem ein Bild auf ein Papierbahnstück abgedruckt wird, dadurch gekennzeichnet, daß das verwendete Papier eine Oberflächenbeschichtung hat, die ein Papierbeschichtungspigment enthält, dessen Oberflächen mit einem Behandlungsmittel mit einem hydrophoben Anteil verändert sind, um den Pigmentoberflächen hydrophobe oder stärker hydrophobe Eigenschaften zu verleihen.

2. Tiefdruckverfahren nach Anspruch 1, wobei das Behandlungsmittel einen unpolaren Anteil besitzt, umfassend mindestens eine Kohlenwasserstoffgruppe einer Kettenlänge von 8 bis 30 Kohlenstoffatomen, wodurch die Pigmentoberflächen derart verändert werden, daß sie eine Anzahl Kohlenwasserstoffgruppen mit jeweils einer Kettenlänge von 8 bis 30 Kohlenstoffatomen tragen.

3. Tiefdruckverfahren nach Anspruch 1 oder 2, wobei das Behandlungsmittel mindestens eine polare Gruppe besitzt, die das Behandlungsmittel an die Oberflächen des unbehandelten Pigmentes binden kann.

4. Tiefdruckverfahren nach einem der vorhergehenden Ansprüche, wobei das Pigment eine natürliche hydrophile Oberfläche besitzt.

5. Tiefdruckverfahren nach Anspruch 4, wobei das Pigment Kaolinit-Ton, natürliches oder gefälltes Calciumcarbonat, Satinweiß oder Calciumsulfat ist oder ein Gemisch ist aus ein oder mehreren dieser Pigmente.

6. Tiefdruckverfahren nach einem der vorhergehenden Ansprüche, wobei das Pigment ein Kaolinit-Ton ist und das Behandlungsmittel ein primäres, sekundäres oder tertiäres Amin mit mindestens einer Kohlenwasserstoffgruppe einer Kettenlänge von 8 bis 30 Kohlenstoffatomen oder eine quarternäre Ammoniumverbindung, die mindestens eine Kohlenwasserstoffgruppe einer Kettenlänge von 8 bis 30 Kohlenstoffatomen enthält.

7. Tiefdruckverfahren nach einem der Ansprüche 1 bis 5, wobei das Pigment ein Calciumcarbonat ist und das Behandlungsmittel eine gesättigte oder ungesättigte Fettsäure ist mit mindestens einer Kohlenwasserstoffgruppe einer Kettenlänge von 8 bis 30 Kohlenstoffatomen.

8. Tiefdruckverfahren nach einem der vorhergehenden Ansprüche, wobei die Menge des eingesetzten Behandlungsmittels, bezogen auf das Gewicht des Pigmentes, von 0,05 Gew.% bis 5,0 Gew.% und vorzugsweise, bezogen auf das Gewicht des Pigments, von 0,1 Gew.-% bis 2,0 Gew.% reicht.

9. Papierbeschichtungszusammensetzung zum Herstellen eines beschichteten Papiers für die Verwendung bei einem Tiefdruckverfahren, wobei die Papierbeschichtungszusammensetzung umfaßt: eine wäßrige Suspension eines Klebemittels, ein Dispersionsmittel sowie ein teilchenförmiges, anorganisches Papierbeschichtungspigment, dadurch gekennzeichnet, daß das Pigment vor dem Einschluß in die Papierbeschichtungszusammensetzung mit einem Behandlungsmittel verändert worden ist, was die Pigmentoberflächen hydrophob macht oder ihre Hydrophobie verstärkt, wobei das zur Behandlung der Pigmentpartikel eingesetzte Behandlungsmittel einen unpolaren, hydrophoben Anteil besitzt, umfassend mindestens eine Kohlenwasserstoffgruppe einer Kettenlänge von 8 bis 30 Kohlenstoffatomen, und einen polaren Anteil, der an Stellen auf den Pigmentoberflächen binden kann.

10. Papierbeschichtungszusammensetzung nach Anspruch 9, wobei das Pigment eine natürliche hydrophile Oberfläche besitzt.

11. Papierbeschichtungszusammensetzung nach Anspruch 10, wobei das Pigment Kaolinit-Ton, natürliches oder gefälltes Calciumcarbonat, Satinweiß oder Calciumsulfat ist oder ein Gemisch ist aus ein oder mehreren dieser Pigmente.

12. Papierbeschichtungszusammensetzung nach einem der Ansprüche 9 bis 11, wobei das Pigment ein Kaolinit-Ton ist und das Behandlungsmittel ein primäres, sekundäres oder tertiäres Amin mit mindestens einer Kohlenwasserstoffgruppe einer Kettenlänge von 8 bis 30 Kohlenstoffatomen oder mit einer quartären Ammoniumverbindung, die mindestens eine Kohlenwasserstoffgruppe einer Kettenlänge von 8 bis 30 Kohlenstoffatomen enthält.

13. Papierbeschichtungszusammensetzung nach einem der Ansprüche 9 bis 11, wobei das Pigment Calciumcarbonat ist und das Behandlungsmittel eine gesättigte oder ungesättigte Fettsäure ist mit mindestens einer Kohlenwasserstoffgruppe einer Kettenlänge von 8 bis 30 Kohlenstoffatomen.

14. Papierbeschichtungszusammensetzung nach einem der Ansprüche 9 bis 13, wobei die Menge des eingesetzten Behandlungsmittels, bezogen auf das Gewicht des Pigmentes, von 0,05 Gew.% bis 5,0 Gew.% und vorzugsweise, bezogen auf das Gewicht des Pigments, von 0,1 Gew.% bis 2,0 Gew.% reicht.

15. Verwendung eines Pigmentes als Tiefdruckpapierbeschichtungspigment, dessen Oberflächen mit einem Behandlungsmittel mit einem hydrophoben Anteil verändert sind, um den Pigmentoberflächen hydrophobe oder stärker hydrophobe Eigenschaften zu verleihen.

16. Papier, beschichtet mit einer Papierbeschichtungszusammensetzung nach einem der Ansprüche 9 bis 14.

17. Druckverfahren, bei dem auf ein Papier, wie in Anspruch 16 beansprucht, ein Bild unter Einsatz einer Tiefdrucktechnik gedruckt wird.

## Revendications

1. Procédé d'impression de gravure dans lequel une image est imprimée sur un élément formant feuille de papier, caractérisé en ce que le papier utilisé est un papier ayant une couche de surface contenant un pigment de couchage de papier dont les surfaces ont été modifiées au moyen d'un agent de traitement comportant une partie hydrophobe pour donner une caractéristique hydrophobe ou d'hydrophobie améliorée aux surfaces de pigment.

2. Procédé d'impression de gravure selon la revendication 1, dans lequel l'agent de traitement comporte une partie non polaire comprenant au moins une fonction hydrocarbure ayant une longueur de chaîne de 8 à 30 atomes de carbone grâce à laquelle les surfaces de pigment sont modifiées de telle façon qu'elles sont pourvues d'une pluralité de fonctions hydrocarbures ayant chacune une longueur de chaîne allant de 8 à 30 atomes de carbone.

3. Procédé d'impression de gravure selon la revendication 1 ou 2, dans lequel l'agent de traitement contient au moins une fonction polaire capable de lier l'agent de traitement aux surfaces du pigment non traité.

4. Procédé d'impression de gravure selon l'une quelconque des revendications précédentes, dans lequel le pigment est l'un de ceux qui ont une surface naturellement hydrophile.

5. Procédé d'impression de gravure selon la revendication 4, dans lequel le pigment est une argile de kaolin, un carbonate de calcium naturel ou précipité, du blanc de satin ou du sulfate de calcium ou un mélange d'un ou plusieurs de ces pigments.

6. Procédé d'impression de gravure selon l'une quelconque des revendications précédentes, dans lequel le pigment est une argile de kaolin et l'agent de traitement est une amine primaire, secondaire ou tertiaire qui comporte au moins une fonction hydrocarbure ayant une longueur de chaîne allant de 8 à 30 atomes de carbone ou un composé d'ammonium quaternaire comportant au moins une fonction hydrocarbure ayant une chaîne allant de 8 à 30 atomes de carbone.

7. Procédé d'impression de gravure selon l'une quelconque des revendications 1 à 5, dans lequel le pigment est un carbonate de calcium et dans lequel l'agent de traitement est un acide gras saturé ou non saturé comportant au moins une fonction hydrocarbure ayant une longueur de chaîne allant de 8 à 30 atomes de carbone.

8. Procédé d'impression de gravure selon l'une quelconque des revendications précédentes, dans lequel la quantité d'agent de traitement utilisée va de 0,05% à 5,0% en poids, sur la base du poids du pigment, et de préférence de 0,1% à 2,0% en poids, sur la base du poids du pigment.

9. Composition de couchage de papier pour préparer un papier couché destiné à être utilisé dans un procédé d'impression de gravure, cette composition de couchage de papier comprenant une suspension aqueuse d'un adhésif, un agent de dispersion et un pigment de couchage de papier particulaire inorganique, caractérisée en ce que le pigment a été modifié par traitement au moyen d'un agent de traitement, avant d'être incorporé dans la composition de couchage de papier, ce qui rend les surfaces de pigment hydrophobes ou améliore leur hydrophobie, l'agent de traitement utilisé pour traiter les particules de pigment comportant une partie hydrophobe non polaire comprenant au moins une fonction hydrocarbure ayant une longueur de chaîne allant de 8 à 30 atomes de carbone et une partie polaire qui est capable de se lier à des sites des surfaces de pigment.

10. Composition de couchage de papier selon la revendication 9, dans laquelle le pigment est l'un de ceux qui ont une surface naturellement hydrophile.

11. Composition de couchage de papier selon la revendication 10, dans laquelle le pigment est une argile de kaolin, un carbonate de calcium naturel ou précipité, du blanc de satin ou du sulfate de calcium ou un mélange de l'un ou plusieurs de ces pigments.

12. Composition de couchage de papier selon l'une quelconque des revendications 9 à 11, dans laquelle le pigment est une argile de kaolin et dans laquelle l'agent de traitement est une amine primaire, secondaire ou tertiaire qui comporte au moins une fonction hydrocarbure ayant une longueur de chaîne allant de 8 à 30 atomes de carbone ou est un composé d'ammonium quaternaire comportant au moins une fonction hydrocarbure ayant une longueur de chaîne allant de 8 à 30 atomes de carbone.

13. Composition de couchage de papier selon l'une quelconque des revendications 9 à 11, dans laquelle le pigment est du carbonate de calcium et l'agent de traitement est un acide gras saturé ou non saturé comportant au moins une fonction hydrocarbure ayant une longueur de chaîne allant de 8 à 30 atomes de carbone.

14. Composition de couchage de papier selon l'une quelconque des revendications 9 à 13, dans laquelle la quantité d'agent de traitement utilisée va de 0,05% à 5,0% en poids, sur la base du poids du pigment, et de préférence de 0,1% à 2,0% en poids sur la base du poids de pigment.

15. Utilisation d'un pigment en tant que pigment de couchage de papier de gravure, dont les surfaces ont été modifiées au moyen d'un agent de traitement ayant une partie hydrophobe pour donner par ce moyen un caractère hydrophobe ou une hydrophobie améliorée aux surfaces de pigment.

16. Papier couché au moyen d'une composition de couchage de papier selon l'une quelconque des revendications 9 à 14.

17. Procédé d'impression dans lequel une image est imprimée sur du papier selon la revendication 16, en utilisant une technique d'impression de gravure.
